**Europäisches Patentamt**

**European Patent Office**

**Office européen des brevets**

(19)

(11) Veröffentlichungsnummer: **0 491 151 A1**

## (12) EUROPÄISCHE PATENTANMELDUNG

(21) Anmeldenummer: **91119045.2**

(22) Anmeldetag: **08.11.91**

(51) Int. Cl.5: **G01L 5/10**

(30) Priorität: **22.11.90 DE 4037065**

(43) Veröffentlichungstag der Anmeldung:
**24.06.92 Patentblatt 92/26**

(84) Benannte Vertragsstaaten:
**AT CH DE FR GB IT LI**

(71) Anmelder: **HOTTINGER BALDWIN MESSTECHNIK GMBH
Im Tiefen See 45 Postfach 42 35
W-6100 Darmstadt(DE)**

(72) Erfinder: **Ort, Werner, Dr.
Mozartweg 42
W-6100 Darmstadt(DE)**

(74) Vertreter: **Brandt, Ernst-Ulrich
Hottinger Baldwin Messtechnik GmbH
Patentabteilung Im Tiefen See 45 Postfach
42 35
W-6100 Darmstadt(DE)**

(54) **Kraftmessvorrichtung zur Messung der Zugspannung von Fäden.**

(57) Bei der Verarbeitung von Fäden in der Textilindustrie ist es häufig notwendig, kleine Fadenspannungen bei großen Verarbeitungsgeschwindigkeiten genau einhalten zu können. Dazu wurde eine Kraftmeßvorrichtung für Fadenspannungen von etwa 0,1 N und einer Eigenfrequenz von ca. 3 KHz geschaffen. Eine derartige Kraftmeßvorrichtung zur Messung der Zugspannung von Fäden ist als stabförmiges Metallteil ausgebildet, das an seinem einen Ende ein Halteelement (1) darstellt, an das ein flaches blattfederartiges Federelement (2) angeordnet ist. Im Anschluß an das Federelement ist ein biegesteifer massearmer Hebelarm (4) vorgesehen, der als konisches Drehteil ausgebildet ist und sich von seiner blattfederseitigen Seite aus verjüngt. An der anderen Seite des Hebelarms ist eine zylindrische Spitze (5) vorgesehen, an der die Fadenspannung angreift. An dem Federelement sind Dehnungsmeßstreifen (3) appliziert, die bei Krafteinleitung ein Signal erzeugen, das proportional der eingeleiteten Kraft ist.

EP 0 491 151 A1

Die Erfindung betrifft eine Kraftmeßvorrichtung zur Messung der Zugspannung von Fäden, insbesondere von Textilfäden gemäß dem Oberbegriff des Patentanspruchs 1.

Bei der Verarbeitung von Fäden, insbesondere in der Textilindustrie, ist es häufig wichtig, bestimmte Fadenspannungen genau einhalten zu können. Dazu ist es erforderlich, daß die Fadenspannung kontinuierlich gemessen wird, um eventuelle Abweichungen erkennen zu können oder durch entsprechende Regeleinrichtungen die Fadenspannung dem Sollwert anzupassen. Dabei treten sehr kleine Fadenspannungen auf, die teilweise kleiner als 0,1 N sind. Da die Fäden in der Regel mit großen Geschwindigkeiten verarbeitet werden sollen, sind zur Fadenmessung Sensoren erforderlich, die große Eigenfrequenzen bis zu 3 KHz aufweisen müssen. Derartige Textilmaschinen verfügen im allgemeinen über hunderte von verschiedenen Einzelfäden, die gleichzeitig verarbeitet werden, so daß bei derartigen Sensoren zur Messung der Zugspannungen eine äußerst kompakte und kostengünstige Herstellbarkeit verlangt wird.

Es wäre daher denkbar, daß eine derartige Meßvorrichtung als Federwaage ausgebildet ist, die mit einer elektrischen Schaltung in Verbindung stehen müßte, die die Federauslenkung in ein entsprechendes elektrisches Signal zur Signalauswertung umwandelt. Dabei könnte man eine Umlenkrolle, die zum Fadentransport dient, an einer Federwaage aufhängen, die dann eine Maß für die Federspannung liefern würde. Da für die Messung von Fadenspannungen sehr kleine Kräfte gemessen werden müssen, die teilweise unter 0,1 N liegen, wären sehr weiche Federn notwendig.

Derartige Feder-Masse-Systeme weisen aber in der Regel sehr geringe Eigenfrequenzen auf, so daß damit nur bei niedrigen Fadengeschwindigkeiten hinreichend genau gemessen werden könnte.

Der Erfindung liegt deshalb die Aufgabe zugrunde, sehr kleine Zugspannungen von Fäden bei hohen Fadengeschwindigkeiten zu messen und dies bei kompakter einfacher Ausgestaltung.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß derartige Meßvorrichtungen zur Fadenspannungsmessung in sehr kompakter Form ausführbar sind. Deshalb ist es möglich, solche Meßvorrichtungen an fast jeder beliebigen Fadenumlenkungsstelle vorzusehen. Darüber hinaus ist es auch möglich, derartige Meßvorrichtungen in größeren Stückzahlen nebeneinander anzuordnen, was insbesondere bei Textilwebmaschinen erforderlich ist, bei denen eine Menge von Fäden parallel geführt werden. Solche Meßvorrichtungen können auch auf einfache Art und Weise an vorhandenen Textilmaschinen nachgerüstet werden ohne daß dafür ein größerer apparativer Aufwand notwendig ist.

Ein weiterer Vorteil der Fadenspannungsmessung mit Hilfe eines derartigen mit Dehnungsmeßstreifen bestückten Meßelements ist die unmittelbare Umwandlung der Kraft in ein elektrisches Meßsignal, das insbesondere in Brückenschaltungstechnik bei Verwendung von vier Dehnungsmeßstreifen ein sehr genaues Meßsignal liefert und mit Hilfe von nachfolgenden Rechenschaltungen gut auswertbar ist. Derartige Fadenspannungsmesser bieten darüber hinaus noch den Vorteil, daß sie keinerlei Verschleißteile aufweisen und daher eine hohe Lebensdauer besitzen.

In vorteilhafter Weise kann die Erfindung auch zur Feststellung von kurzzeitigen Grenzwertüberschreitungen der Fadenspannung benutzt werden. So wird in Verbindung mit einer Rechenschaltung die verhältnismäßig hochfrequente Fadenspannungsmessung innerhalb eines kontinuierlich fortschreitenden Meßzyklus gespeichert und ein Mittelwert gebildet. Der jeweils auftretende Meßwert kann dann sowohl mit dem Mittelwert verglichen werden als auch mit einem oberen und unteren Grenzwert. Durch die elektronische Rechenschaltung können dann derartige Grenzwertüberschreitungen bzw. Mittelwertabweichungen gespeichert oder signalisiert werden. Dies gestattet bei besonderen Fadenherstellungsverfahren auch Aussagen über die Fadenqualität des jeweiligen Herstellungsprozesses.

Bei speziellen Ausgestaltungen der Erfindung ergibt sich darüber hinaus noch der Vorteil, daß die Meßvorrichtung sehr einfach herstellbar ist. So kann der Grundkörper mit dem Federelement aus einem einstückigen Leichtmetallteil, das als Meterware angeboten wird, herausgearbeitet werden. Dafür werden lediglich Leichtmetallteile von einigen Zentimetern Länge und Querschnitten von ca. 1 cm$^2$ benötigt. Aus diesem Teil werden an denen sich gegenüberliegenden Flächenteilen Aussparungen eingefräst, bei dem nur noch ein kleiner Steg übrig bleibt, der die Feder darstellt. Um den Hebelarm möglichst massearm zu gestalten, wird dieser soweit abgedreht oder mit einer Bohrung versehen, bis er gerade noch biegesteif genug ist. Zur Komplettierung der Kraftmeßvorrichtung ist dann lediglich noch die Aufbringung der Dehnungsmeßelemente und deren elektrische Verschaltung notwendig.

Darüber hinaus kann die Kraftmeßvorrichtung noch mit einem Gehäuseteil umgeben werden, durch das der Bereich des mit dem Dehnungsmeßelement bestückten Federteils von schädlichen Umwelteinflüssen abgeschirmt wird. Dieses Gehäuseteil dient auch gleichzeitig als Überlastanschlag, der bei Knotenbildung oder beim Stocken des Fadens eine Zerstörung der Fadenspannungsmeßvorrichtung verhindert.

Die Erfindung wird anhand eines Ausführungsbeispiels, das in der Zeichnung dargestellt ist, näher erläutert. Es zeigen:

Fig. 1: eine Kraftmeßvorrichtung zur Messung der Zugspannung von Fäden;

Fig. 2: eine Kraftmeßvorrichtung zur Messung der Zugspannung von Fäden mit versetzten Aussparungen;

Fig. 3: eine Kraftmeßvorrichtung zur Messung der Zugspannung von Fäden mit Überlastungsanschlag und

Fig. 4: eine Hebelarmspitze mit Keramikumlenkröhrchen.

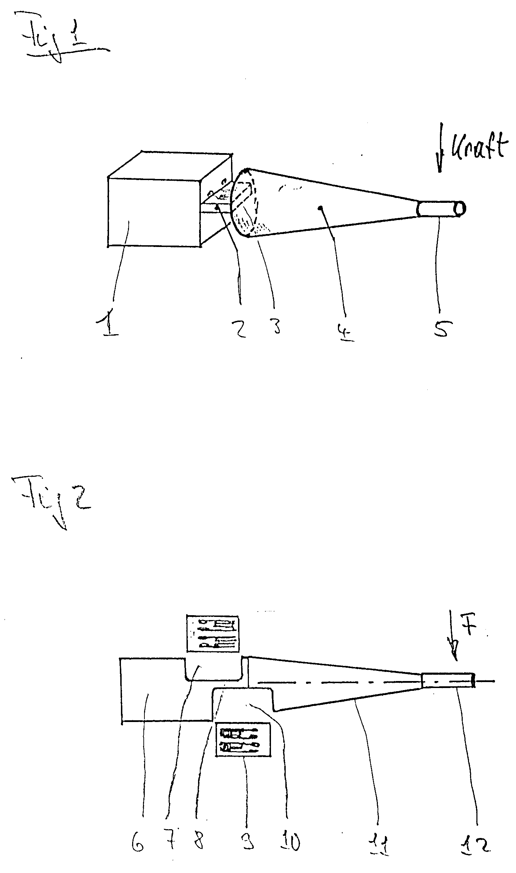

Aus Fig. 1 der Zeichnung ist eine Kraftmeßvorrichtung ersichtlich, die im wesentlichen aus dem Halteelement 1 besteht, an dessen Stirnfläche das flache blattfederartige Federelement 2 angesetzt ist, das auf seiner Unter- und Oberseite mit Dehnungsmeßstreifen bestückt ist. An das Federelement ist andererseits ein konischer Hebelarm 4 befestigt, der sich zur Krafteinleitungsseite hin verjüngt und eine zylindrische Spitze 5 enthält, die zur Fadenumlenkung dient.

Das Halteelement 1 besteht aus einem quaderförmigen Metallteil, dessen Kantenlänge nicht größer als 5 mm zu sein braucht. Dieses Halteelement 1 dient in erster Linie zur Befestigung der Kraftmeßvorrichtung an einem vorgesehenen Maschinenteil. An einer der Stirnflächen ist ein flaches blattfederartiges Federelement 2 befestigt, auf das die Dehnungsmeßstreifen 3 aufgeklebt werden. Dieses Federelement 2 kann als dünnes Blechteil ausgebildet sein, dessen Länge nicht mehr als etwa 1,5 mm und dessen Breite nicht mehr als 5 mm betragen muß. Dieses Blechteil könnte auch dünner als 1 mm sein. Das Federelement 2 ist senkrecht auf der Stirnfläche des Halteelements 1 angeordnet. Dabei ist das Federelement 2 etwa in der Mitte der Stirnfläche an dem Halteelement 4 befestigt, wobei es parallel zu den Kanten des Halteelements 1 verläuft. Dabei könnte das Federelement 2 sowohl als Einzelteil mit dem Halteelement 1 verbunden sein, als auch aus diesem ausgearbeitet worden sein. Das Halteelement 1 könnte aber auch bereits ein Teil der Textilmaschine darstellen, an das das Federelement 2 befestigt würde.

An der der Stirnseite gegenüberliegenden Federseite ist das Federelement 2 mit einem Hebelarm 4 verbunden, der um ein Vielfaches länger als das Federelement 2 ausgebildet ist. Der Hebelarm 4 besteht aus einem konischen Metallteil, dessen größter Durchmesser sich an der Verbindung beim Federelement befindet. An dem verjüngenden Ende des Hebelarmes 4 ist eine zylinderförmige Spitze 5 vorgesehen, an der die zu messende Kraft angreift. Der Hebelarm 4 besteht vorzugsweise aus einem Leichtmetall um einerseits die Masse gering zu halten und andererseits den Hebelarm 4 biegesteif auszugestalten. Eine konische Ausgestaltung ist deshalb vorteilhaft, weil das Biegemoment zur Krafteinleitungsstelle hin abnimmt und deshalb zu dieser Stelle hin die Masse verringert werden kann. Der Hebelarm könnte allerdings auch aus anderen Materialien bestehen. Desweiteren könnte er auch als zylindrisches Vollmaterial oder in Röhrchenform ausgebildet sein.

Vorzugsweise wird sowohl das Halteelement 1 als auch das Federelement 2 und der Hebelarm 4 aus einem einstückigen Leichtmetallmaterial ausgearbeitet. In Betracht kommen dabei Aluminiumlegierungen, die als Federmaterial gut geeignet sind und die einen kleinen Elastizitätsmodul aufweisen. Diese Materialien sind gut zu bearbeiten und bilden gleichzeitig einen massearmen Hebelarm.

Das Federelement 2 wird vorzugsweise mit Miniaturdehnungsmeßelementen bestückt, die sowohl auf dessen Ober- als auch Unterseite befestigt werden. Um bei möglichst kleiner Dehnung ein möglichst großes Meßsignal zu halten, werden üblicherweise vier aktive Dehnungsmeßstreifen 3 auf der Feder 2 appliziert. Die Dehnungsmeßstreifen 3 werden noch mit nicht dargestellten elektrischen Anschlüssen versehen, um das durch die eingeleitete Kraft verursachte Meßsignal entsprechend auswerten zu können. Dazu sind elektronische Auswerteschaltungen vorgesehen.

Die zylindrische Hebelarmspitze 5 stellt im Grunde eine Fadenumlenkrolle dar, um die der Faden im praktischen Betrieb herumgelegt wird. An dieser Stelle greift eine Kraft in Form einer Fadenspannung an dem Hebelarm 4 an. Dazu wird der Faden stets in Biegerichtung um den Hebelarm 4 gezogen. Bei Krafteinleitung wird damit über den Hebel eine Kraft auf das Federelement übertragen, das sich damit in Kraftrichtung durchbiegt. Hierdurch wird in den Dehnungsmeßstreifen 3 ein entsprechendes elektrisches Signal erzeugt, das proportional der eingeleiteten Kraft ist und entsprechend weiterverarbeitet werden kann. Die Länge des Hebelarms 4 ist dabei im wesentlichen von der Größe der einleitbaren Kräfte und der Dimensionierung des Federelements abhängig. Um eine möglichst kompakte Ausführung der Kraftmeßvorrichtung zu erreichen, wird ein möglichst kurzes Federelement 2 angestrebt. Dies muß aber mindestens so lang sein wie die Länge der Dehnungsmeßstreifen 3 ist. Um nun auch Kraftmessungen bei hohen Fadengeschwindigkeiten zu ermöglichen, müssen die Federsteifigkeit und damit die Dicke des Federelementes mit der Masse des Hebelarms 4 optimiert werden. Bei der vorgesehenen Ausführungsform hat sich vorzugsweise ein Längenverhältnis des Federelements 2 zum Hebelarm 4 von 1:20 als günstig herausgestellt. Bei derartigen Kraftmeßvorrichtungen sind bei Kräften von ca. 1 N Eigenfrequenzen von bis zu 3 Khz erreichtbar.

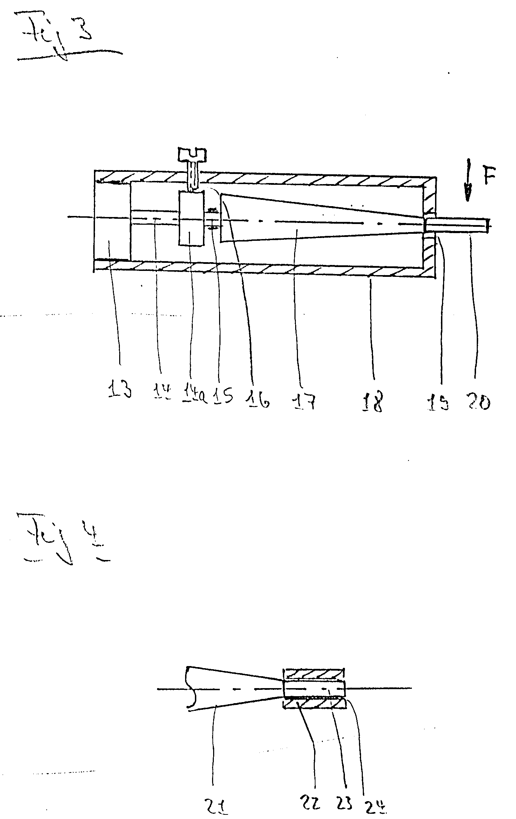

Die Fig. 2 der Zeichnung zeigt eine Ausführung einer Kraftmeßvorrichtung, die aus einem einstückigen Leichtmetallgrundkörper ausgearbeitet ist, bei der das Federelement 8 durch zwei versetzt angebrachte Aussparungen 7, 10 gebildet wird. Der Grundkörper der Kraftmeßvorrichtung besteht aus einem Rundstab einer Aluminiumlegierung, der zwei gegenüberliegende Aussparungen 7, 10 aufweist. Die Aussparungen 7, 10 sind in Längsrichtung versetzt angeordnet und durch zwei gleich tiefe Ausfräsungen gebildet, die an den sich überlappenden Stellen einen Steg 8 zwischen dem Halteelement 6 und dem Hebelarm 11 darstellen. Der verbleibende Steg 8 bildet das Federelement der Kraftmeßvorrichtung. Der an die Feder 8 anschließende Hebelarm 11 wird durch eine konische Verjüngung zum anderen Ende hin erreicht. Der Hebelarm 11 enthält an seiner Spitze einen zylindrischen Teil 12, der zur Krafteinleitung dient und um den der Faden herumgeführt wird.

Die versetzte Anordnung der Aussparungungen hat den Zweck, daß die Länge des Federelements möglichst gering gehalten werden kann. So besteht bei der Anbringung der Dehnungsmeßstreifen 9 die Schwierigkeit, genügend Platz zur Verschaltung der Dehnungsmeßstreifen 9 zu besitzen. So sind üblicherweise die Dehnungsmeßstreifen 9 auf ein Trägermaterial aufgebracht, das spröde und deshalb nicht um Ecken knickbar ist. Die Feder 8 muß deshalb in der Regel so lang sein, daß sie sowohl die Anbringung für das Gitter des Dehnungsmeßstreifens 9 als auch deren Anschlüsse ermöglicht. Da aber die Dehnung ausschließlich auf der Länge des Gitters gemessen wird, wurden die Aussparungen um die Länge der Anschlußdrähte gegeneinander versetzt. Dadurch entsteht ein Federelement 8, dessen Länge der Länge des Gitters entspricht. Bringt man nun die Dehnungmeßstreifen 9 so in den Aussparungen 7, 10 an, daß deren Anschlußdrähte in verschiedene Längsrichtungen zeigen, so entsteht ein sehr kurzes Federelement 8, das optimale Meßeigenschaften gewährleistet und eine einfache Anschlußmöglichkeit an die Rückführleitungen gestattet. Darüber hinaus ist ein derartiges einstückiges Kraftmeßelement als Automatendrehteil sehr einfach und damit kostengünstig herstellbar.

Wird die Kraftmeßvorrichtung nun durch eine Fadenspannung an der Krafteinleitungsseite in Kraftrichtung belastet, so entsteht eine Auslenkung des Hebelarms in Kraftrichtung. Dadurch wird gleichfalls eine Biegespannung im Federelement erzeugt, das eine entsprechende Widerstandsänderung in den Dehnungsmeßstreifen 9 zur Folge hat. Dadurch wird ebenfalls in einer nicht dargestellten Auswerteeinrichtung ein elektrisches Signal erzeugt, das der eingeleiteten Kraft proportional ist.

Die Fig. 3 der Zeichnung zeigt eine Kraftmeßvorrichtung nach Art der Kraftmeßvorrichtung nach Fig. 1 der Zeichnung, das durch ein Gehäuseteil 18 umschlossen ist. Dabei ist das Gehäuseteil 18 zylinderförmig ausgebildet und besitzt an seiner Stirnseite, die der Krafteinleitungsseite zugewandt ist, eine Bohrung 19, durch die die Spitze 20 des Hebelarms 17 herausragt. Dabei ist der Durchmesser der Bohrung 19 mindestens um den Betrag der maximalen Auslenkung größer als der Durchmesser der Hebelarmspitze 20.

Das Gehäuseteil 18 besitzt einen Innendurchmesser, der dem Außendurchmesser des Halteelements 13 entspricht und mit diesem fest verbunden ist. Das Gehäuseteil 18 enthält an seiner Außenwandung eine Gewindebohrung, in der eine Schraube 16 als Einstellmittel vorgesehen ist, die senkrecht auf den Hebelarm 17 ausgerichtet ist.

Die Bohrung 19 an der krafteinleitungsseitigen Stirnfläche stellt dabei einen Überlastanschlag dar. Dieser ist deshalb notwendig, weil z. B. bei Knotenbildungen oder anderen Fadenstockungen ein Vielfaches der sonst üblichen Fadenspannungen entsteht, die zu einer Zerstörung der Dehnungsmeßstreifen 3, 9 führen würden. Deshalb ist im Anschluß an das Halteelement 13 eine zweite Feder 14 angeordnet, die an ihrem Ende eine zylinderförmige Verdickung 14a aufweist, die ein Anschlag für die Einstellschraube bildet. Zwischen der zylinderförmigen Verdickung 14a und dem Hebelarm 17 befindet sich das Federelement 15, auf dem die Dehnungsmeßstreifen appliziert sind. Da bei der vorgesehenen Kraftmeßvorrichtung für sehr große Eigenfrequenzen nur ein sehr starres Federelement 15 in Betracht kommt, entsteht an der Hebelarmspitze nur eine sehr geringe Auslenkung. Die Gehäusebohrung 19 als Überlastanschlag ist unter vernünftigem Aufwand kaum so genau herstellbar, daß sie einen definierten Luftspalt von einem Bruchteil eines Millimeters zwischen der Hebelarmspitze 20 und der Gehäusewand bildet. Um dieser Fertigungsschwierigkeit zu entgehen, ist das zweite Federelement 14 vorgesehen, dessen Federsteifigkeit weicher ist als die des Federelements 15. Dabei wird durch die Einstellschraube 16 das zweite Federelement 14 soweit vorgespannt, daß die zylinderförmige Verdickung 14a erst bei Überschreiten der Nennlast von der Spitze der Einstellschraube 16 abhebt. Der Hebelarm 17 wird dann soweit ausgelenkt, bis er an die Gehäusewand der Bohrung anschlägt, die den Überlastanschlag darstellt. Dadurch ist ein wesentlich größerer Spalt als Überlastanschlag zwischen der Hebelarmspitze und der Gehäusewandung zulässig. Dies ist dadurch erreichbar, daß das zweite Federelement 14 weicher ist als das Federelement 15 und deshalb nach dem Überschreiten der Nennlast sich lediglich noch das zweite Federelement 14 verformt, wodurch eine Zerstörung der Dehnungsmeßstreifen durch eine übermäßige Biegung des Federelements 15 verhindert wird.

In Fig. 4 der Zeichnung ist ein Schnittbild einer Hebelarmspitze 21 der Kraftmeßvorrichtungen nach Fig. 1 oder 2 dargestellt. Diese Hebelarmspitze 21 weist halteelementsseitig einen konischen Teil und krafteinleitungsseitig einen zylindrischen Teil 21 auf. An dem zylindrischen Teil 21 ist ein Keramikröhrchen 22 befestigt, das eine abriebfeste Hebelarmspitze darstellt. Da die zylindrische Hebelarmspitze als Umlenkrolle für den vorbeigeführten Faden dient, entsteht an den Berührungspunkten Reibung, die bei längerer Betriebszeit zu Abriebserscheinungen an weichen Spitzen führen würde. Diese Abriebserscheinungen werden durch besonders harte Werkstoffe, wie das vorgesehene Keramikröhrchen 22, gering gehalten.

Das Keramikröhrchen 22 wird vorteilhafterweise durch einen termoplastischen Klebstoff 24 mit der Hebelarmspitze 23 verbunden. Die Verwendung eines termoplastischen Klebstoffs 24 hat den Vorteil, daß derartige Keramikröhrchen 22 ohne eine Demontage der Kraftmeßvorrichtung ersetzt werden können, indem der Klebstoff durch einen Erhitzungsvorgang seine Klebkraft verliert. Bei höheren Fadenspannungen können statt des Keramikröhrchens 22 aber auch Rollen als Fadenläufer an der Spitze des Hebelarms befestigt werden.

Der erfindungsgemäße Gegenstand ist aber auch bei stärkeren Fäden, Seilen oder anderen Fasern mit höheren Zugspannungen verwendbar, bei der die Kraft mit großen Umlaufgeschwindigkeiten gemessen werden soll.

**Patentansprüche**

1. Kraftmeßvorrichtung zur Messung der Zugspannung von Fäden, insbesondere von Textilfäden, dadurch gekennzeichnet, daß an einem Halteelement (1, 6) ein flaches blattfederartiges Federelement (2, 8) vorgesehen ist, das mit mindestens einem Dehnungsmeßstreifen (3, 9) versehen ist und mit einem biegesteifen, massearmen Hebelarm (4, 11) in Verbindung steht, der zur Kraftübertragung auf das Federelement (2, 8) dient, wobei der Hebelarm (4, 11) lang gegenüber dem Federelement (2, 8) ist.

2. Kraftmeßvorrichtung nach Anspruch 1, dadurch gekennzeichnet, daß das Halteelement (1, 6), das Federelement (2, 8) und der Hebelarm (4, 11) einstückig ausgebildet sind und aus Leichtmetall bestehen, das einen kleinen Elastizitätsmodul aufweist.

3. Kraftmeßvorrichtung nach Anspruch 1 oder 2, dadurch gekennzeichnet, daß das Halteelement (1) quaderförmig ausgebildet ist und an einer Stirnfläche das blattfederartige Federelement (2, 8) enthält, das senkrecht auf der Fläche steht und als rechteckiges dünnes Flächenelement ausgebildet ist, an das der Stirnfläche gegenüberliegenden Federseite ebenfalls rechtwinklig zur Stirnfläche der Hebelarm (4, 11) angeordnet ist.

4. Kraftmeßvorrichtung nach wenigstens einem der vorhergehenden Ansprüche, dadurch gekennzeichnet, daß der Hebelarm (4, 11) kegelförmig ausgebildet ist und sich von der Federseite aus verjüngt, wobei der größte Kegeldurchmesser der Breite des Federelementes (2, 8) entspricht.

5. Kraftmeßvorrichtung nach wenigstens einem der vorhergehenden Ansprüche, dadurch gekennzeichnet, daß das Federelement nicht länger und nicht breiter als der Dehnungsmeßstreifen (3, 9) ist, wobei das Verhältnis der Länge des Federelements zur Länge des Hebelarms (4, 11) etwa 1:20 beträgt.

6. Kraftmeßvorrichtung nach Anspruch 2, dadurch gekennzeichnet, daß das Federelement (8) durch zwei in Längsrichtung versetzte Aussparungen (7, 10) gebildet wird, bei dem sich die Aussparungen gegenüberliegen und soweit überlappen, daß sich zwischen ihnen ein ebenes dünnwandiges Flächenelement (8) bildet, dessen Länge klein gegenüber der Hebelarmlänge ist, wobei die nicht überlappenden Flächenteile zum elektrischen Anschluß der Dehnungsmeßstreifen (9) dienen.

7. Kraftmeßvorrichtung nach wenigstens einem der vorhergehenden Ansprüche, dadurch gekennzeichnet, daß die Meßvorrichtung mit einem zylinderförmigen Gehäuseteil (18) umgeben ist, das mit dem Halteelement (13) verbunden ist und an seiner dem Halteelement (13) gegenüberliegenden Stirnseite eine Bohrung (19) enthält, aus der der Hebelarm (17) mit seiner Spitze (20) herausragt und bei der die Bohrung (19) so bemessen ist, daß sie einen Überlastanschlag bildet.

8. Kraftmeßvorrichtung nach Anspruch 7, dadurch gekennzeichnet, daß zwischen dem Halteelement (13) und dem Federelement (15) ein zweites Federelement (14) vorgesehen ist, das eine weichere Feder darstellt als das Federelement (15) und mit Einstellmitteln versehen ist, durch das das zweite Federelement (14) mit einer bestimmten Federvorspannung beaufschlagbar ist.

9. Kraftmeßvorrichtung nach wenigstens einem der vorhergehenden Ansprüche, dadurch gekennzeichnet, daß der Hebelarm (4, 11, 17, 21) an seiner Spitze (23) zylinderförmig ausgebildet ist, und daß über diesen zylinderförmigen Teil ein als Fadenführung dienendes Keramikröhrchen (22) geschoben und lösbar befestigt ist.

10. Kraftmeßvorrichtung nach wenigstens einem der vorhergehenden Ansprüche, dadurch gekennzeichnet, daß der Hebelarm hohl ausgebildet ist.

Fig 1

Kraft

1    2  3    4    5

Fig 2

F

6  7  8    3  10    11    12

Fig 3

F

13　14　14a　15　16　17　18　19　20

Fig 4

21　22　23　24

Europäisches
Patentamt

# EUROPÄISCHER RECHERCHENBERICHT

Nummer der Anmeldung

EP 91 11 9045

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 388 879 (E.I. DU PONT DE NEMOURS AND COMPANY) * Figur 1; Spalten 3,4 * | 1,2,7 | G 01 L 5/10 |
| A | US-A-4 548 085 (R.H. GRUNDY) * Figur 1; Spalte 8, Zeile 17 - Spalte 10, Zeile 20 * | 1,2 | |
| A | CH-A- 671 829 (VISCOSUISSE S.A.) * ganze Schrift * | 1,9 | |
| A | DE-A-3 408 497 (PETER LANCIER MASCHINENBAU-HAFENHÜTTE GMBH) * Figur 1; Anspruch 1; Seite 4, Absatz 1 * | 1,7 | |

|  |  |  | RECHERCHIERTE SACHGEBIETE (Int. Cl.5) |
|---|---|---|---|
|  |  |  | G 01 L 5/10 |

Der vorliegende Recherchenbericht wurde für alle Patentansprüche erstellt

| Recherchenort | Abschlußdatum der Recherche | Prüfer |
|---|---|---|
| BERLIN | 27-02-1992 | KOEHN G |

EPO FORM 1503 03.82 (P0403)